# EUROPEAN PATENT APPLICATION

(11) **EP 3 299 979 A1**
(43) Date of publication of application: **28.03.2018**
(21) Application number: 17192742.9
(22) Date of filing: 22.09.2017
(51) Int. Cl.: G06F 21/12, G06F 21/62

(54) **SERVER GRANTING LICENSE TO IMAGE FORMING APPARATUS, METHOD OF MANAGING LICENSE, AND LICENSE MANAGEMENT SYSTEM**

(30) Priority: 27.09.2016 US 201615277258
(71) Applicant: KABUSHIKI KAISHA TOSHIBA, Minato-ku Tokyo 105-8001 (JP); Toshiba TEC Kabushiki Kaisha, Tokyo 141-8562 (JP)
(72) Inventor: FUKUHARA, Takanori, Shinagawa-ku, Tokyo 141-8562 (JP)
(74) Representative: Takeuchi, Maya

(57) **Abstract**

A license management server is connected with a plurality of image forming apparatuses. The server includes a memory that stores a limited license for enabling a restricted function of the image forming apparatuses, and a processor configured to determine whether the license can be issued to one of the image forming apparatuses, and upon determining that the license can be issued to the one of the image forming apparatuses, transmit the license enabling the restricted function to the one of the image forming apparatuses.

## Description

### FIELD

Embodiments described herein relate generally to a technology for managing licenses.

### BACKGROUND

Image forming apparatuses can impose restrictions on individual functions such as a network printing function or a scanning function. In order to override the restrictions on the functions of the image forming apparatuses, it is necessary to connect hardware keys for overriding the functions to the image forming apparatuses. The hardware keys are unique to the respective image forming apparatuses. In order to override the restrictions on the functions of the plurality of image forming apparatuses, it is necessary to prepare the hardware keys corresponding to the number of image forming apparatuses, thereby increasing cost. Since it is necessary to connect the hardware keys to the respective image forming apparatuses, it takes time. When image forming apparatuses are located at places distant from users, the users have to go to the places to connect the hardware keys to the corresponding apparatuses, thereby burdening the users.

To solve the above-mentioned problems, there is provided a license management server connected with a plurality of image forming apparatuses, the server comprising: a memory that stores a limited license for enabling a restricted function of the image forming apparatuses; and a processor configured to: responsive to a request for issuing the license to enable the restricted function from one of the image forming apparatuses, determine whether the license can be issued to the one of the image forming apparatuses, and upon determining that the license can be issued to the one of the image forming apparatuses, transmit the license enabling the restricted function to the one of the image forming apparatuses.

Preferably, the processor is further configured to encrypt the license using identification information unique to the image forming apparatus.

Preferably, the processor is further configured to notify a charging server of the content of the issued license, after executing the transmission of the license to the one of the image forming apparatuses.

Preferably, the restricted function is one of a network printing function, a scanning function, and an increased printing speed.

Preferably, the processor is further configured to revoke the license with respect to the restricted function issued to the one of the image forming apparatuses, in response to a determination that the one of the image forming apparatuses is not using the restricted function.

Preferably, the determination that the one of the image forming apparatus is not using the restricted function is based on an indication received from the one of the image forming apparatuses that the one of the image forming apparatuses is done using the restricted function.

Preferably, the determination that the one of the image forming apparatus is not using the restricted function is based on an expiration of a predetermined time during which an indication that the one of the image forming apparatuses is using the restricted function is not received.

The present invention also relates to a method of managing a floating license for enabling a restricted function of a plurality of image forming apparatuses, the method comprising the steps of: storing the license; responsive to a request for issuing the license to enable the restricted function from one of the image forming apparatuses, determining whether the license can be issued to the one of the image forming apparatuses; and upon determining that the license can be issued to the one of the image forming apparatuses, transmitting the license enabling the restricted function to the one of the image forming apparatuses.

The method may further comprise the step of: encrypting the license using identification information unique to the image forming apparatus before transmitting the license to the one of the image forming apparatuses.

The method may further comprise the step of: notifying a charging server of the content of the issued license after transmitting the license to the one of the image forming apparatuses.

Preferably, the restricted function is one of a network printing function, a scanning function, and an increased printing speed.

The method may further comprise the step of: revoking the license with respect to the restricted function issued to the one of the image forming apparatuses in response to a determination that the one of the image forming apparatuses is not using the restricted function.

Preferably, the determination that the one of the image forming apparatus is not using the restricted function is based on an indication received from the one of the image forming apparatuses that the one of the image forming apparatuses is done using the restricted function.

Preferably, the determination that the one of the image forming apparatus is not using the restricted function is based on an expiration of a predetermined time during which an indication that the one of the image forming apparatuses is using the restricted function is not received.

The present invention further relates to a system for managing a floating license, the system comprising: at least one slave image forming apparatus; and a master image forming apparatus having: a memory that stores the floating license for enabling a restricted function in the master and slave image forming apparatuses, and a processor configured to: responsive to a request for issuing the license to enable the restricted function from the slave image forming apparatus, determine whether the license can be issued to the slave image forming apparatus, and upon determining that the license can be issued to the slave image forming apparatus, transmit the license enabling the restricted function to the slave image forming apparatus.

Preferably, the restricted function is one of a network printing function, a scanning function, and an increased printing speed.

Preferably, the processor is further configured to control the master image forming apparatus to revoke the license with respect to the restricted function of the slave image forming apparatus in response to a determination that the slave image forming apparatus is not using the restricted function.

Preferably, the determination that the slave image forming apparatus is not using the restricted function is based on an indication received from the slave image forming apparatus that the slave image forming apparatus is done using the restricted function.

Preferably, the determination that the one of the image forming apparatus is not using the restricted function is based an expiration of a predetermined time during which an indication that the one of the image forming apparatuses is using the restricted function is not received.

Preferably, the at least one slave image forming apparatuses is a plurality of slave image forming apparatuses, and the processor of the master image forming apparatus determines whether the license can be issued to a requesting one of the plurality of the slave image forming apparatuses based on a maximum number of image forming apparatuses allowed by the license to simultaneously use the restricted function.

### DESCRIPTION OF THE DRAWINGS

FIG. 1 is a diagram illustrating a license management system.
FIG. 2 is a flowchart illustrating a license management process in image forming apparatuses.
FIG. 3 is a flowchart illustrating a process when a master image forming apparatus receives an inquiry about a license of a designation function from slave image forming apparatuses.
FIG. 4 is a flowchart illustrating a process when a management server receives a request for issuing the license.
FIG. 5 is a flowchart illustrating a process when the image forming apparatus requests to issue a license for the individual image forming apparatus.
FIG. 6 is a flowchart illustrating a process when the management server issues a license targeting the individual image forming apparatus.

### DETAILED DESCRIPTION

According to an embodiment, a license management server is connected with a plurality of image forming apparatuses. The server includes a memory that stores a limited license for enabling a restricted function of the image forming apparatuses, and a processor configured to determine whether the license can be issued to one of the image forming apparatuses, and upon determining that the license can be issued to the one of the image forming apparatuses, transmit the license enabling the restricted function to the one of the image forming apparatuses.

Hereinafter, embodiments will be described with reference to the drawings.

### First Embodiment

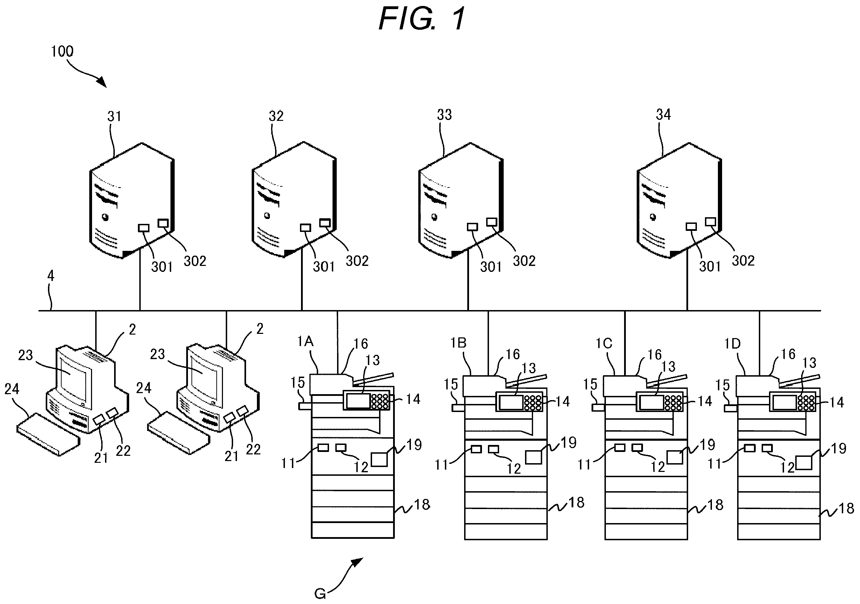

FIG. 1 is a diagram illustrating a license management system 100.

The license management system 100 includes a plurality of image forming apparatuses 1A to 1D, a plurality of personal computers (PCs) 2, a management server 31, a charging server 32, an authentication server 33, and a document management system (DMS) server 34. These elements can be connected to a network 4 to communicate with each other.

The image forming apparatuses 1A to 1D are multi-functional peripherals (MFPs) that have a plurality of functions such as printing, scanning, and FAX.

The image forming apparatuses 1A to 1D each include a processor 11, a memory 12, a display 13, an operation unit 14, a card reader 15, an image reading unit 16 (scanner), a sheet accommodation unit 18, and a printer unit 19. The processor 11 is an arithmetic processing unit such as a central processing unit (CPU). The memory unit 12 may include a main memory that stores data in a volatile manner and directly inputs and outputs data to and from the processor 11. Further, the memory unit 12 may include a ROM and an auxiliary memory that stores a control program or data in a non-volatile manner. The operation unit 14 is, for example, a keyboard or a touch panel and receives an operation by a user. The card reader 15 reads an ID card to acquire identification information regarding the user. The image reading unit 16 reads an image of a document on a document table or the like and generates image data (electronic file). The sheet accommodation unit 18 accommodates a sheet. The printer unit 19 forms an image on the sheet provided from the sheet accommodation unit.

The image forming apparatuses 1A to 1D may have restrictions imposed on individual functions such as a network printing function or a scanning function. The image forming apparatuses 1A to 1D can override the restrictions on the functions based on licenses.

In the present embodiment, an example in which the management server 31 issues a floating license will be described. The floating license enables any of the image forming apparatuses 1A to 1D to execute a certain function and regulates a maximum number of image forming apparatuses 1A to 1D that are capable of simultaneously executing the function.

The image forming apparatuses 1A to 1D form a group G in which the floating license is shared. The image forming apparatus 1A is set as a master (serving apparatus) and the image forming apparatuses 1B to 1D are set as slaves (slaving apparatuses). That is, each of the image forming apparatuses 1A to 1D recognize that the image forming apparatus 1A is the master and the image forming apparatuses 1B to 1D are the slaves. The master image forming apparatus 1A manages the slave image forming apparatuses 1B to 1D based on a license. For example, when a license corresponding to two units in regard to the network print function is issued to the group G, the master image forming apparatus 1A manages the image forming apparatuses 1A to 1D so that the maximum number of image forming apparatuses 1A to 1D that simultaneously execute the network print function is equal to or less than two units.

The PC 2 includes a processor 21, a memory 22, a display 23, an operation unit 24, and a card reader (not shown). The operation unit 24 is, for example, a keyboard, a mouse, or a touch panel and receives an operation by a user. The processor 21 is an arithmetic processing unit such as a central processing unit (CPU). The memory unit 22 may include a main memory that stores data in a volatile manner and directly inputs and outputs data to and from the processor 21. Further, the memory unit 22 may include a ROM and an auxiliary memory that stores a control program or data in a non-volatile manner.

The servers 31 to 34 each include a processor 301 and a memory 302. The processor 301 is an arithmetic processing unit such as a central processing unit (CPU). The memory unit 302 may include a main memory that stores data in a volatile manner and directly inputs and outputs data to and from the processor 301. Further, the memory unit 302 may include a ROM and an auxiliary memory that stores a control program or data in a non-volatile manner.

The management server 31 issues a license for one or more of the image forming apparatuses 1A to 1D and transmits the license to the corresponding one or more image forming apparatuses 1A to 1D. The management server 31 provides the PCs 2 and the image forming apparatuses 1A to 1D with a web page that can receive inputs of licenses (newly issued license and/or a change in content of an existing license) and a web page that can receive an instruction to transmit a license to one or more of the image forming apparatuses 1A to 1D. The PCs 2 and the image forming apparatuses 1A to 1D display the web pages using a web browser. The management server 31 receives input by users on the web pages from the PCs 2 and one or more of the image forming apparatuses 1A to 1D, and issues and transmits a license based on the received input. At this time, the management server 31 encrypts the licenses using the identification information of the corresponding image forming apparatuses 1A to 1D as transmission destinations, and subsequently transmits the license to the corresponding image forming apparatuses 1A to 1D as the transmission destinations.

When the license permits one or more the individual image forming apparatuses 1A to 1D to execute functions, the management server 31 transmits the license to the corresponding individual image forming apparatuses 1A to 1D. In this case, the management server 31 manages the license and stores the license in memory 302. When the license is a floating license, the management server 31 transmits the license to the master image forming apparatus 1A. In this case, the master image forming apparatus 1A manages the license and stores the license in memory 12.

The charging server 32 executes a charging process such as calculation of a charging amount based on the content of the license (i.e., what functions were licensed) issued by the management server 31.

The authentication server 33 registers and manages users. The authentication server 33 receives an authentication request of the users from the PCs 2 and the image forming apparatuses 1A to 1D and authenticates the users.

The DMS server 34 receives and stores image data or print jobs from the PCs 2 and the image forming apparatuses 1A to 1D. The DMS server 34 transmits the image data or the print jobs associated with the users to the PCs 2 and the corresponding image forming apparatuses 1A to 1D used by the users according to the transmission requests from the authenticated users. The network printing function of the image forming apparatuses 1A to 1D includes acquiring image data or a print job from the DMS server 34 and printing the image data or executing the print job. A scanning function of the image forming apparatuses 1A to 1D includes transmitting or storing image data of a document read by the image reading unit 16 to at least one of the DMS server 34, the image forming apparatuses 1A to 1D, and the PCs 2.

A group of the servers 31 to 34 which are connected to the network 4 to provide services to the image forming apparatuses 1A to 1D functions as a cloud. In the cloud, the servers 31 to 34 are linked. In the cloud, the certain servers 31 to 34 appropriately perform several functions.

Hereinafter, a license management process executed by the license management system 100 will be described. Hereinafter, processes in elements (the slave image forming apparatuses 1B to 1D, the master image forming apparatus 1A, and the management server 31) when the management server 31 transmits a floating license to the master image forming apparatus 1A and the master image forming apparatus 1A manages the license will be described.

The image forming apparatuses 1A to 1D, the PCs 2, and the servers 31 to 34 execute the following processes by causing the processors 11, 21, and 301 to execute programs stored in the memories 12, 22, and 302, respectively.

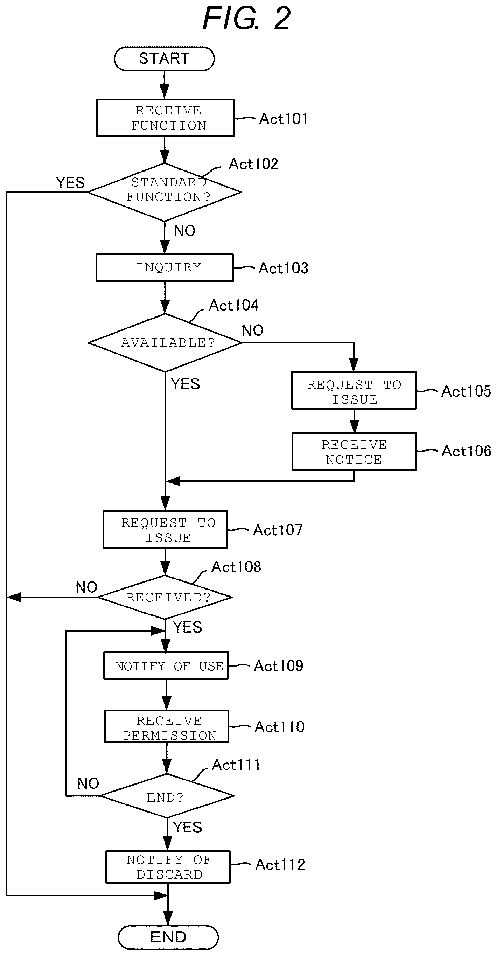

FIG. 2 is a flowchart illustrating a license management process in any one of the slave image forming apparatuses 1B to 1D.

As an example, the image forming apparatuses 1A to 1D are assumed to be used by staffs of the same department of a certain company on the same floor.

Any one of the slave image forming apparatuses 1B to 1D receive designation of a function to operate in response to an operation of the operation unit 14 (Act 101). The image forming apparatus (one of 1B to 1D) determines whether the designated function (for example, the network printing function) is a standard function (Act 102). The standard function is a function of the image forming apparatus which is enabled in advance. A designated function which is not the standard function may be, for example, a scanning function or a network printing function.

When the designated function is a standard function (Yes in Act 102), the management process ends. Conversely, when the designated function is not the standard function (No in Act 102), the image forming apparatus (one of 1B to 1D) inquires of the master image forming apparatus 1A about whether a license (floating license) of the designated function is available (Act 103).

At this time, the image forming apparatus (one of 1B to 1D) transmits the identification information unique to the corresponding image forming apparatus to the master image forming apparatus 1A. The unique identification information is, for example, a MAC address. The master image forming apparatus 1A replies to the requesting image forming apparatus 1B-1D whether the license of the designated function is available. When the slave image forming apparatus receives a reply indicating that the license of the designated function is not available (No in Act 104), the slave image forming apparatus communicates with the management server 31 via the master image forming apparatus 1A and display an input screen regarding content of the license of the designated function.

The slave image forming apparatus requests the management server 31 to issue a license including the designated function via the master image forming apparatus 1A based on inputs received on the input screen (Act 105). In the request for the license, for example, the scanning function is requested to be permitted for one unit and/or the network printing function is requested to be permitted for two units in the group G. The content of the license includes a validity period. When the image forming apparatuses 1A to 1D can vary a printing speed or a scanning speed, the license can be configured to include the printing speed or the scanning speed. The printing speed may be a number of print sheets or a rate of printing sheet in predetermined term. The validity period is a term which is available to use issued license.

Since the license is the floating license, the management server 31 encrypts the license using the identification information unique to the master image forming apparatus 1A. Then, the management server 31 transmits the license to the master image forming apparatus 1A. The management server 31 transmits the license to the master image forming apparatus 1A through packet communication in conformity with a communication protocol. Hereinafter, the transmission through the packet communication is referred to as packet transmission in some cases.

After the slave image forming apparatus receives an issue notification of the license from the master image forming apparatus 1A (Act 106), the slave image forming apparatus requests the master image forming apparatus 1A to issue the license of the designated function. The slave image forming apparatus also transmits the identification information corresponding to the slave image forming apparatus (Act 107). When the slave image forming apparatus receives a reply indicating that the license of the designated function is available from the master image forming apparatus 1A (Yes in Act 104), the slave image forming apparatus executes Act 107.

When the master image forming apparatus 1A can issue the license, the master image forming apparatus 1A executes the packet transmission of the license to the slave image forming apparatus. For example, the master image forming apparatus 1A stores the license corresponding to only two units with respect to the network printing function. Therefore, when the number of licenses of the network printing function already granted to the image forming apparatuses in the group G is equal to or less than 1, the master image forming apparatus 1A determines that the license is available in regard to the network printing function.

When the slave image forming apparatus receives the license (Yes in Act 108), the slave image forming apparatus overrides the restrictions on the designated function based on the license. The slave image forming apparatus executes the designated function. The slave image forming apparatus notifies the master image forming apparatus 1A that the license is being used during execution of the designated function (Act 109).

The slave image forming apparatus receives permission to continuously use the license from the master image forming apparatus 1A(Act 110).

The slave image forming apparatus notifies the master image forming apparatus 1A that the license is being used for each given period (No in Act 111, Act 109, and Act 110). When execution of the designated function ends and use of the license ends (Yes in Act 111), the slave image forming apparatus notifies the master image forming apparatus 1A that the license of the designated function is cancelled (Act 112).

The master image forming apparatus 1A recognizes that one license of the designated function to be managed is returned. Accordingly, in Act 112, the slave image forming apparatus returns the license of the designated function to the image forming apparatus 1A after the use of the designated function is completed.

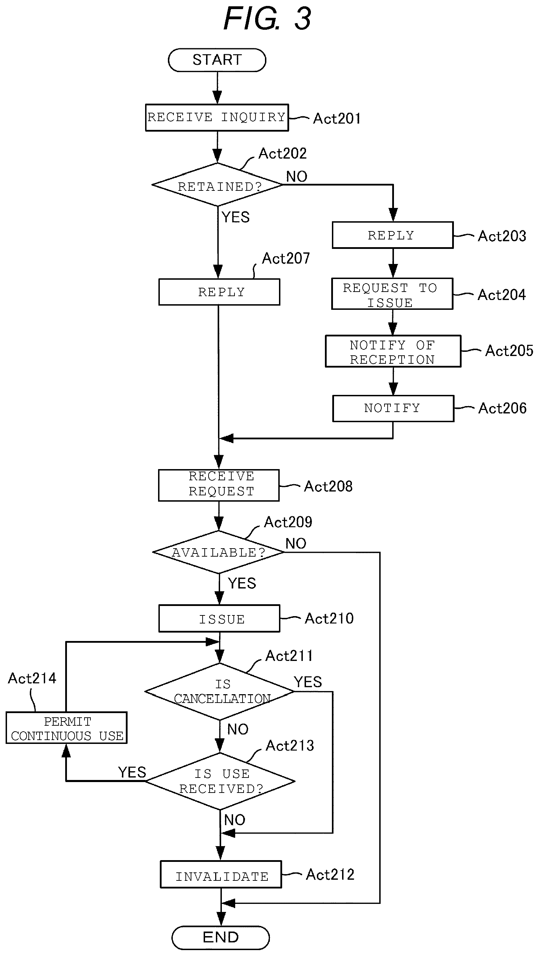

FIG. 3 is a flowchart illustrating a process when the master image forming apparatus 1A receives a request for issuing a license of a designated function from one of the the slave image forming apparatuses 1B to 1D. The flowchart illustrating a process in Fig. 3 is performed by the processor 11 of the image forming apparatus.

The master image forming apparatus 1A receives an inquiry about whether the license of the designated function is available from the one of the slave image forming apparatuses 1B to 1D (and the master image forming apparatus 1A) (Act 201).

When the master image forming apparatus 1A does not have the license of the designated function (No in Act 202), the master image forming apparatus 1A replies to the slave image forming apparatus that the license of the designated function is not available (Act 203).

The master image forming apparatus 1A receives the request for issuing the license including the designated function from the slave image forming apparatus and makes the request for issuing the license to the management server 31 (Act 204).

The master image forming apparatus 1A receives the license including the designated function from the management server 31 and notifies the corresponding slave image forming apparatus of the reception of the license (Act 205).

The master image forming apparatus 1A notifies the charging server 32 of the content of the stored license (Act 206). The notification may be executed by the management server 31. The charging server 32 executes a charging process such as calculation of a cost charging amount based on the content of the license issued by the management server 31 or stored by the master image forming apparatus 1A.

When the master image forming apparatus 1A stores the license of the designated function (Yes in Act 202), the master image forming apparatus 1A replies to the corresponding slave image forming apparatus that the license of the designated function is available (Act 207).

After Acts 206 and 207, the master image forming apparatus 1A receives the request for issuing the license of the designated function from the slave image forming apparatus and receives the identification information of the slave image forming apparatus (Act 208). The master image forming apparatus 1A determines whether the license is available (Act 209).

The master image forming apparatus 1A determines that the license is available when the license of the designated function is stored (Yes in Act 209). The master image forming apparatus 1A executes the packet transmission of the license of the designated function to the slave image forming apparatus that made the request for issuing the license and issues the license (Act 210).

When the master image forming apparatus 1A receives an indication that the license of the designated function is cancelled from the slave image forming apparatus (Yes in Act 211), the master image forming apparatus 1A invalidates the license of the designated function granted to the slave image forming apparatuses 1B to 1D and recognizes that the license of the designated function is returned (Act 212).

Conversely, when the master image forming apparatus 1A does not receive the indication that the license of the designated function is cancelled from the slave image forming apparatus (No in Act 211), the master image forming apparatus 1A determines whether an indication that the license is used is received from the slave image forming apparatus within a regulated time (Act 213).

When the master image forming apparatus 1A receives the indication that the license is used (Yes in Act 213), the master image forming apparatus 1A transmits a permission to continuously use the license to the corresponding slave image forming apparatus (Act 214).

Conversely, when the master image forming apparatus 1A does not receive the indication that the license is used within the regulated time (No in Act 213), the master image forming apparatus 1A cancels the license of the designated function granted to the slave image forming apparatus and recognizes that the license of the designated function is returned (Act 212).

When the validity period of the license expires, the master image forming apparatus 1A cancels the license for which the validity period expires. The master image forming apparatus 1A notifies the management server 31 that the license is cancelled. Accordingly, each of the image forming apparatuses 1A to 1D in the group G may not execute the function permitted by the license. The management server 31 may invalidate the license for which the validity period possessed by the master image forming apparatus 1A expires.

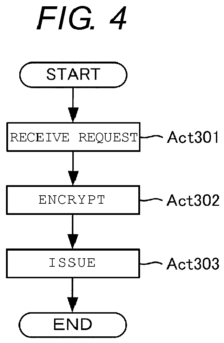

FIG. 4 is a flowchart illustrating a process when the management server 31 receives the request for issuing the license. The flowchart illustrating a process in Fig. 4 is performed by the processor 301 of the management server 31.

The management server 31 provides a web page that receives inputs of the content of the license for the slave image forming apparatuses 1B to 1D via the master image forming apparatus 1A and receives the request for issuing the license including the designated function from one of the slave image forming apparatuses 1B to 1D (Act 301). At this time, the management server 31 receives the corresponding identification information regarding the requesting one of the image forming apparatuses 1A to 1D from the image forming apparatus 1A in addition to the identification information regarding the master image forming apparatus 1A.

The management server 31 encrypts the license including the designated function using the identification information regarding the master image forming apparatus 1A (Act 302). At this time, the management server 31 stores the license in association with the identification information regarding the respective image forming apparatuses 1A to 1D of the group G.

The management server 31 executes the packet transmission of the license to the master image forming apparatus 1A to issue the license (Act 303).

The users can request the management server 31 to issue the floating license of the designated function in advance with the client terminals (the PCs 2 or the image forming apparatuses 1A to 1D) before certain image forming apparatuses 1A to 1D execute the designated function. In this case, the client terminals communicate with the management server 31, receive inputs of the group of the license granting target image forming apparatuses 1A to 1D, and display input screens for receiving inputs of the content of the license. The client terminals requests the management server 31 to issue the license based on the inputs received on the input screens. At this time, the client terminal transmits the identification information regarding the master image forming apparatus 1A in the group G of the license granting target image forming apparatuses 1A to 1D to the management server 31. When the management server 31 receives the request for issuing the license (Act 301), the management server 31 issues the license and encrypts the license using the identification information of the master image forming apparatus 1A (Act 302). The management server 31 transmits the license to the master image forming apparatus 1A to issue the license (Act 303).

### Second Embodiment

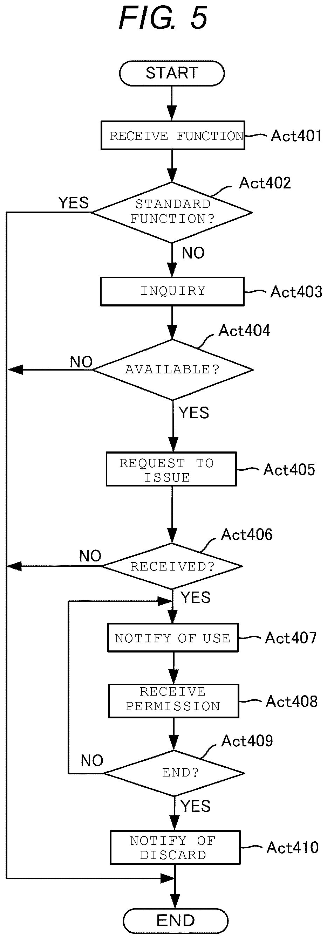

Hereinafter, a license management process when one of the image forming apparatuses 1A to 1D requests the management server 31 to issue a license designated for only individual image forming apparatuses will be described. In the present embodiment, the management server 31 issues individual licenses in regard to functions of the image forming apparatuses 1A to 1D and collectively manages the licenses of the image forming apparatuses 1A to 1D. FIG. 5 is a flowchart illustrating a process of the image forming apparatuses 1A to 1D. The flowchart illustrating a process in Fig. 5 is performed by the any one of processor 11 of the image forming apparatus 1A to 1D.

In the following process, one of the client terminals (the PCs 2 or the image forming apparatuses 1A to 1D) are assumed to request the management server 31 to issue the license of the designated function in regard to one of the individual image forming apparatuses 1A to 1D in advance. At this time, the client terminal communicates with the management server 31, receives inputs of the license available for target image forming apparatuses 1A to 1D, and displays input screens receiving inputs of the content of the license. The client terminal requests the management server 31 to issue the license based on the inputs received on the input screens. At this time, the client terminal transmits the identification information regarding the target image forming apparatus (one of 1A to 1D) to the management server 31. The management server 31 issues the license with the content requested in regard to the designated image forming apparatus and stores the license.

The image forming apparatus (one of 1A to 1D) receives designation of the function to operate in accordance with an operation on the operation unit 14 (Act 401). The image forming apparatus determines whether the designated function is a standard function (Act 402). When the designated function is a standard function (Yes in Act 402), the management process ends. Conversely, when the designated function is not a standard function (No in Act 402), the image forming apparatus inquires of the management server 31 about whether the license of the designated function is available (Act 403). At this time, the image forming apparatus transmits the identification information to the management server 31.

When the management server 31 stores the license of the designated function, the management server 31 replies to the image forming apparatus that the license of the designated function is available. When the image forming apparatus receives a reply indicating that the license of the designated function is available (Yes in Act 404), the image forming apparatus requests that the management server 31 issues the license of the designated function and transmit the identification information corresponding to the image forming apparatus to the management server 31 (Act 405).

When the management server 31 does not store the license of the designated function, the management server 31 replies to the image forming apparatus that the license is not available and ends the process (No in Act 404).

When the management server 31 receives the request for issuing the license in Act 405, the management server 31 encrypts the license using the identification information unique to the image forming apparatus. The management server 31 executes the packet transmission of the license to the image forming apparatus. When the image forming apparatus receives the license of the designated function from the management server 31 (Yes in Act 406), the image forming apparatus overrides the restrictions on the designated function based on the license. The image forming apparatus executes the designated function. The image forming apparatus notifies the management server 31 that the license is being used during execution of the designated function (Act 407).

The image forming apparatus receives a permission to continuously use the license from the management server 31 (Act 408). The image forming apparatus notifies the management server 31 that the license is being used for each given period (No in Act 409, Act 407, and Act 408). When the execution of the designated function ends and the use of the license ends (Yes in Act 409), the management server 31 is notified that the license of the designated function is cancelled. In other words, the management server 31 is notified that the license of the designated function is returned (Act 410).

The management server 31 recognizes that the license of the designated function in regard to the image forming apparatus is returned.

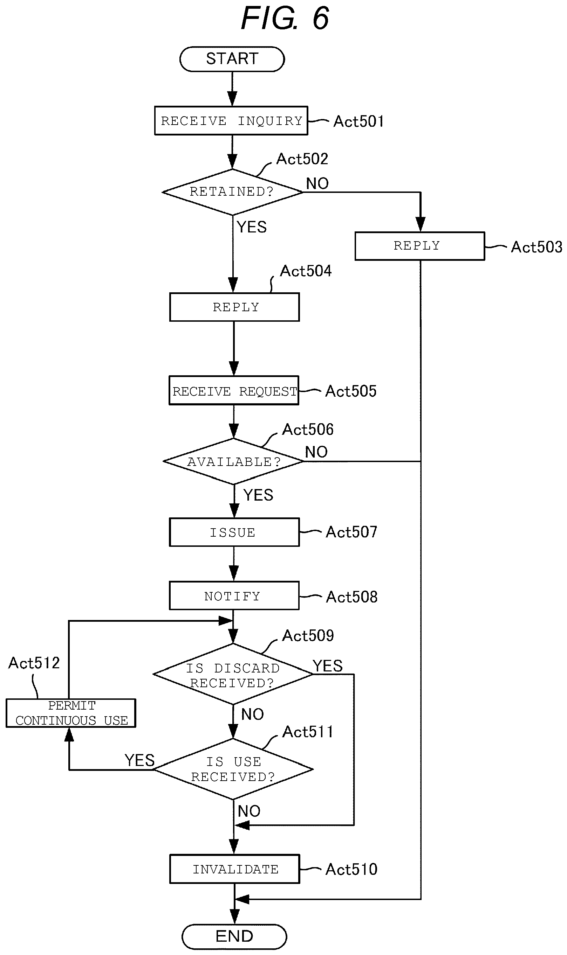

Hereinafter, a process of the management server 31 when the request for issuing the license for one of the individual image forming apparatuses 1A to 1D is received will be described with reference to FIG. 6. The flowchart illustrating a process in Fig. 6 is performed by the processor 301 of the management server 31.

The management server 31 receives, from one of the image forming apparatuses 1A to 1D, an inquiry about whether the license of the designated function is available to the image forming apparatus (Act 501).

When the management server 31 does not store the license of the designated function in regard to the image forming apparatus (No in Act 502), the management server 31 replies to the image forming apparatus that the license of the designated function is not available (Act 503) and ends the process.

When the management server 31 stores the license of the designation function in regard to the image forming apparatuses 1A to 1D (Yes in Act 502), the management server 31 replies to the image forming apparatus that the license of the designated function is available (Act 504).

The management server 31 receives the request for issuing the license of the designated function and the identification information regarding the image forming apparatus from the corresponding one of the image forming apparatuses 1A to 1D (Act 505). When the management server 31 determines that the license is available (Yes in Act 506), the management server 31 executes the packet transmission of the license of the designated function to the image forming apparatus to issue the license (Act 507).

The management server 31 notifies the charging server 32 of the content of the issued license (Act 508). The charging server 32 executes a charging process such as calculation of a cost charging amount based on the content of the issued license.

When the management server 31 receives an indication that the license of the designated function is no longer needed from the image forming apparatus (Yes in Act 509), the management server 31 cancels the license of the designated function granted to the image forming apparatus and recognizes that the license of the designated function is returned (Act 510).

Conversely, when the management server 31 does not receive the indication that the license of the designated function is no longer needed in the image forming apparatus (No in Act 509), the management server 31 determines whether an indication that the license is used is received from the image forming apparatus within a regulated time (Act 511).

When the management server 31 receives the indication that the license is used (Yes in Act 511), the management server 31 transmits a permission to continue to use the license to the image forming apparatus (Act 512).

Conversely, when the management server 31 does not receive the indication that the license of the designated function is used within the regulated time (No in Act 511), the management server 31 cancels the license of the designated function granted to the image forming apparatus and recognizes that the license of the designated function is returned (Act 510).

When the validity period of the stored license expires, the management server 31 cancels the license for which the validity period expires. Accordingly, the target image forming apparatuses 1A to 1D may no longer execute the function permitted by the license.

In an embodiment, by issuing a license in which an apparatus speed is increased temporarily for a period of time at which a load is applied to apparatus activation, such as the end of year or the end of a term, it is possible to reduce the load of the image forming apparatus.

In an embodiment, since the image forming apparatuses 1A to 1D are connected to a cloud interlock with the charging server 32 on the cloud, the charging process and the issuing of the license can be executed together. Therefore, the users can directly execute a request for issuing the license and charging management accompanied with the request without intervention with a business department or an agency.

In an embodiment, the use restrictions of the functions stored by the image forming apparatuses 1A to 1D can be executed efficiently and flexibly. Accordingly, the user can use the designated function at low cost and can freely select the function to be used for each of the image forming apparatuses 1A to 1D.

As described above in detail, a technology for managing the license can be provided according to the technology described in the present specification.

While certain embodiments have been described, these embodiments have been presented by way of example only, and are not intended to limit the scope of invention. Indeed, the novel apparatus, methods and system described herein may be embodied in a variety of other forms; furthermore, various omissions, substitutions and changes in the form of the apparatus, methods and system described herein may be made without departing from the framework of the inventions. The accompanying claims and their equivalents are intended to cover such forms or modifications as would fall within the scope of the inventions.

## Claims

1. A license management server connected with a plurality of image forming apparatuses, the server comprising:
a memory that stores a limited license for enabling a restricted function of the image forming apparatuses; and
a processor configured to:
responsive to a request for issuing the license to enable the restricted function from one of the image forming apparatuses, determine whether the license can be issued to the one of the image forming apparatuses, and
upon determining that the license can be issued to the one of the image forming apparatuses, transmit the license enabling the restricted function to the one of the image forming apparatuses.

2. The server according to claim 1, wherein
the processor is further configured to encrypt the license using identification information unique to the image forming apparatus.

3. The server according to claim 1 or 2, wherein
the processor is further configured to notify a charging server of the content of the issued license, after executing the transmission of the license to the one of the image forming apparatuses.

4. The server according to any one of claims 1 to 3, wherein the restricted function is one of a network printing function, a scanning function, and an increased printing speed.

5. The server according to any one of claims 1 to 4, wherein the processor is further configured to revoke the license with respect to the restricted function issued to the one of the image forming apparatuses, in response to a determination that the one of the image forming apparatuses is not using the restricted function.

6. The server according to claim 5, wherein the determination that the one of the image forming apparatus is not using the restricted function is based on an indication received from the one of the image forming apparatuses that the one of the image forming apparatuses is done using the restricted function.

7. The server according to claim 5 or 6, wherein the determination that the one of the image forming apparatus is not using the restricted function is based on an expiration of a predetermined time during which an indication that the one of the image forming apparatuses is using the restricted function is not received.

8. A method of managing a floating license for enabling a restricted function of a plurality of image forming apparatuses, the method comprising the steps of:
storing the license;
responsive to a request for issuing the license to enable the restricted function from one of the image forming apparatuses, determining whether the license can be issued to the one of the image forming apparatuses; and
upon determining that the license can be issued to the one of the image forming apparatuses, transmitting the license enabling the restricted function to the one of the image forming apparatuses.

9. The method according to claim 8, further comprising the step of:
encrypting the license using identification information unique to the image forming apparatus before transmitting the license to the one of the image forming apparatuses.

10. The method according to claim 8 or 9, further comprising the step of:
notifying a charging server of the content of the issued license after transmitting the license to the one of the image forming apparatuses.

11. The method according to any one of claims 8 to 10, wherein the restricted function is one of a network printing function, a scanning function, and an increased printing speed.

12. The method according to any one of claims 8 to 11, further comprising the step of:
revoking the license with respect to the restricted function issued to the one of the image forming apparatuses in response to a determination that the one of the image forming apparatuses is not using the restricted function.

13. The method according to claim 12, wherein the determination that the one of the image forming apparatus is not using the restricted function is based on an indication received from the one of the image forming apparatuses that the one of the image forming apparatuses is done using the restricted function.

14. The method according to claim 12 or 13, wherein the determination that the one of the image forming apparatus is not using the restricted function is based on an expiration of a predetermined time during which an indication that the one of the image forming apparatuses is using the restricted function is not received.

15. A system for managing a floating license, the system comprising:
at least one slave image forming apparatus; and
a master image forming apparatus having:
a memory that stores the floating license for enabling a restricted function in the master and slave image forming apparatuses, and
a processor configured to:
responsive to a request for issuing the license to enable the restricted function from the slave image forming apparatus, determine whether the license can be issued to the slave image forming apparatus, and
upon determining that the license can be issued to the slave image forming apparatus, transmit the license enabling the restricted function to the slave image forming apparatus.
